# EUROPEAN PATENT APPLICATION

(11) **EP 4 811 841 A1**
(43) Date of publication of application: **23.09.2026**
(21) Application number: 25305366.4
(22) Date of filing: 18.03.2025
(51) Int. Cl.: H04W 12/041, H04L 9/08, H04W 12/0431, H04W 12/06, H04W 12/122, H04W 12/30

(54) **METHOD FOR ENSURING THAT A UE COMPRISING A USIM CONNECTS TO A LEGITIMATE BASE STATION, CORRESPONDING COMMUNICATION SYSTEM, USIM, UE AND BASE STATION**

(71) Applicant: THALES DIS FRANCE SAS, 92190 Meudon (FR); THALES, 92190 Meudon (FR)
(72) Inventor: PANAITOPOL, DORIN, 13705 LA CIOTAT (FR); PAULIAC, Mireille, 13705 LA CIOTAT (FR); DELAVEAU, Francois, 13705 LA CIOTAT (FR); DANY, Vincent, 13705 LA CIOTAT (FR)
(74) Representative: Scheer, Luc

(57) **Abstract**

The invention concerns a method for ensuring that a UE 20 comprising a USIM connects to a legitimate base station, the method comprising:
a) generating 30 between the UE 20 and a base station 21 at least a secret key K_{PLS} using physical layer properties of the radio channel during a PLS-SKG procedure between the UE 20 and the base station 21;
b) sending 31 from the base station 21 to an AMF/SEAF 22 at least one of the secret keys K_{PLS}, the AMF/SEAF 22 belonging to the home network 11 of the USIM or to a visited network 10;
c) sending 32 from the UE 20 its SUCI to the AMF/SEAF 22;
d) sending from the AMF/SEAF 22 the SUCI and the secret key K_{PLS} to an AUSF/UDM 23;
e) sending 34, from the AUSF/UDM 23 an Authentication token AUTN K, K_{PLS} to the UE 20, the Authentication token AUTN K, K_{PLS} being generated based on the long-term key of the USIM and the secret key K_{PLS};
f) verifying 35 at the USIM the received Authentication token AUTN K, K_{PLS} using its internal computations to confirm the authenticity of the long-term key and the secret key K_{PLS}, authenticity of the secret key K_{PLS} confirming the authenticity of the base station 21 for ensuring that the UE 20 connects to a legitimate base station.

## Description

### FIELD

The present invention concerns telecommunications and more precisely a method ensuring that a UE (user equipment), like for example a smartphone, an loT device or a computer connects to a legitimate base station (or a gNodeB in a 5G network).

In the next description, a gNodeB will be assimilated to a base station (BS).

### BACKGROUND

Rogue base station attacks have been recently identified by a program of the GSMA (e.g., GSMA CVD-2024-0090 program, CVD corresponding to Coordinated Vulnerability Disclosure). This program gives security researchers a route to disclose a vulnerability impacting the mobile ecosystem.

Rogue base station attacks exploit a weakness in current cellular networks (including 5G) where only the home core network is authenticated, but not authenticating the serving network providing the radio access network (RAN) leaving the device vulnerable to malicious serving network. A malicious actor can set up a rogue or false base station to deceive UE into connecting to an unauthorized network, either through non-authenticated false BS or by acting as a dual-stack device (false BS + UE). This induces significant risks, particularly when users roam into visited networks.

Thus, the main problem is to ensure that a UE is connected to a legitimate serving network, both when it is in its home network (HPLMN) and when it is roaming in a visited network (VPLMN).

In the current prior art, there is no solution that guarantees both the UE and the BS's mutual authenticate in both home and visited networks.

However, there are more efficient alternatives than the ones described in the previously cited program, and this is one of the purposes of this invention.

The present invention proposes a method and alternatives as claimed.

### SUMMARY

More precisely, the invention proposes a method for ensuring that a UE comprising a USIM connects to a legitimate base station, the method comprising:
a- generating at the UE and a base station at least a secret key K_{PLS} using physical layer properties of the radio channel during a PLS-SKG procedure between the UE and the base station;
b- sending from the base station to an AMF/SEAF at least one of the secret keys K_{PLS}, the AMF/SEAF belonging to the home network of the USIM or to a visited network;
c- sending from the UE its SUCI to the AMF/SEAF;
d- sending from the AMF/SEAF the SUCI and the secret key K_{PLS} to an AUSF/UDM;
e- sending, from the AUSF/UDM a Authentication token AUTN to the UE, the Authentication token AUTN being generated based on the long-term key of the USIM and the secret key K_{PLS};
f- verifying at the USIM the received Authentication token AUTN using its internal computations to confirm the authenticity of the long-term key and the secret key K_{PLS}, authenticity of the secret key K_{PLS} confirming the authenticity of the base station for ensuring that the UE connects to a legitimate base station.

Preferably, at step -a-, n PLS keys K_{PLS} are generated for different time slots between the UE and the base station, n being >= 1, the base station selects m keys over n and sends them to the core network of the base station, the m keys having maximum of entropy, after having sent the SUCI from the UE to the AMF/SEAF, the core network selects from the m keys one key (i), named K_{PLS-i} key, to compute by the AUSF/UDM the authentication token by combining the long-term key K and the K_{PLS-i} key, the AUSF/UDM sends to the USIM the authentication token comprising the value I, and the USIM verifies the received AUTN to confirm the authenticity of the long-term key K and the K_{PLS-i} key, authenticity of the K_{PLS-i} key confirming the authenticity of the base station, for ensuring that the UE connects to a legitimate base station. Alternatively, the n PLS keys K_{PLS} can be obtained over different frequency intervals for the given system channel bandwidth. Alternatively, the n PLS keys K_{PLS} can be obtained from different channel bandwidths supported by the UE and the xNB.

The authentication token is advantageously computed:
- by mixing the long-term key K with K_{PLS-i}, or
- by using K_{PLS-i} as a one-time password (OTP) protected by the Message Authentication Code (MAC) generated from K.

Preferably, at step -a-, the UE and the base station negotiate the time slot i used for PLS at the beginning of the session for the establishment of a secret key K_{PLS-i}; and steps -b- to -f- are performed by using the secret key K_{PLS-i} instead of K_{PLS}.

The time slot i is preferably periodically changed, based on System Frame Number (SFN), Subframe Number, Slot Number, Symbol Number, Dynamic Bandwidth Adjustments (DBA) or Bandwidth Part (BWP).

Advantageously, the UE and the base station exchange SUCI, AUTN and RES in an encrypted manner which is driven by secret keys K_{PLS} and K_{PLS-}i.

The invention also concerns a communication system ensuring that a UE comprising a USIM connects to a legitimate base station, the system comprising:
- a visited PLMN in which a UE is under coverage of a base station of the visited PLMN;
- a home PLMN;

the system being configured for generating at the UE and the base station at least a secret key K_{PLS} using physical layer properties of the radio channel during a PLS-SKG procedure between the UE and the base station;
and in which:
   - the base station is configured for sending to an AMF/SEAF at least one of the secret keys K_{PLS}, the AMF/SEAF belonging to the home network of the USIM or to a visited network;
   - the UE is configured for sending its SUCI to the AMF/SEAF;
   - the AMF/SEAF is configured for sending the SUCI and the secret key K_{PLS} to an AUSF/UDM;
   - the AUSF/UDM is configured for sending an Authentication token AUTN to the UE, the Authentication token AUTN being generated based on the long-term key of the USIM and the secret key K_{PLS};
   - the USIM is configured for verifying the received Authentication token AUTN to confirm the authenticity of the long-term key and the secret key K_{PLS}, authenticity of the secret key K_{PLS} confirming the authenticity of the base station for ensuring that the UE connects to a legitimate base station.

The invention also concerns a base station of a communication system ensuring that a UE comprising a USIM connects to a legitimate base station, the base station being configured for:
- generating at least a secret key K_{PLS} using physical layer properties of the radio channel during a PLS-SKG procedure between the UE and the base station;
- sending to an AMF/SEAF at least one of the secret keys K_{PLS}, the AMF/SEAF belonging to the home network of the USIM or to a visited network.

The invention also concerns a USIM of a UE configured for ensuring that the UE connects to a legitimate base station, the USIM being configured for:
- generating at least a secret key K_{PLS} using physical layer properties of the radio channel during a PLS-SKG procedure between the UE and the base station;
- receiving from an AUSF/UDM a Authentication token AUTN being generated based on the long-term key of the USIM and the secret key K_{PLS};
- verifying the received Authentication token AUTN using its internal computations to confirm the authenticity of the long-term key and the secret key K_{PLS}, authenticity of the secret key K_{PLS} confirming the authenticity of the base station for ensuring that the UE connects to a legitimate base station.

Finally, the invention concerns a UE configured for ensuring that the UE connects to a legitimate base station, the UE being configured for:
- generating at least a secret key K_{PLS} using physical layer properties of the radio channel during a PLS-SKG procedure between the UE and the base station;
- receiving from an AUSF/UDM an Authentication token AUTN being generated based on the long-term key of the UE and the secret key K_{PLS};
- verifying the received Authentication token AUTN using its internal computations to confirm the authenticity of the long-term key and the secret key K_{PLS}, authenticity of the secret key K_{PLS} confirming the authenticity of the base station for ensuring that the UE connects to a legitimate base station.

### DESCRIPTION OF THE DRAWINGS

The present invention proposes a solution method ensuring that a UE connects to a legitimate base station (or a gNodeB in 5G networks), and will be better understood by reading the following description of the figures that represent:
- Figure 1 a preferred method for implementing the invention;
- Figure 2 a first alternative for implementing the invention;
- Figure 3 a second alternative for implementing the invention.

### DETAILED DESCRIPTION

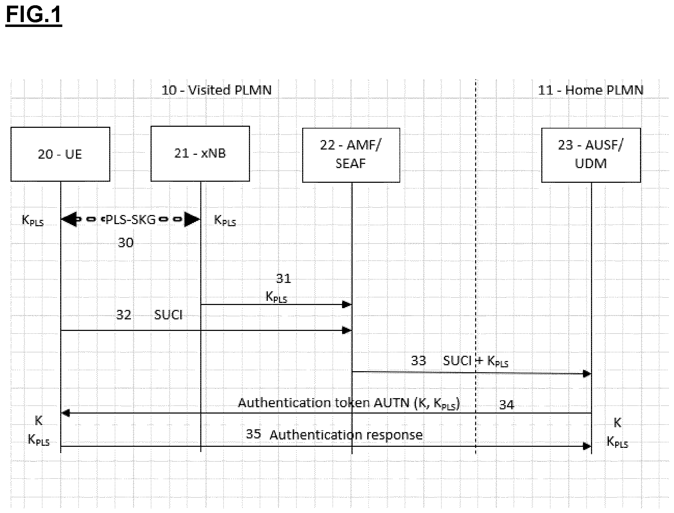

Figure 1 represents a preferred method for implementing the invention in a 5G network.

In this figure, different entities of a telecommunication system are represented: A visited PLMN 10 in which a UE 20 is under coverage and a home PLMN 11. Here, it is supposed that the UE 20 is in roaming. The UE 20 comprises a USIM (Universal Subscriber Identity Module).

The visited PLMN 10 comprises a xNB 21 (or more generally a BS - BS standing for "Base Station") that can be a BTS in 2G (BTS standing for "Base Transceiver Station"), a NodeB in 3G, an eNB in 4G (eNB standing for "enhanced NodeB"), a gNB in 5G (gNB standing for "next generation NodeB") or any xNB evolution in next generations (other types of BS from future generations), and an AMF/SEAF 22 (Access and Mobility Management Function / Security Anchor Function).

The terms xNB and base station will be considered as equivalent in the following description.

The home PLMN 11 comprises an AUSF/UDM 23 (Authentication Server Function / Unified Data Management).

The method of the invention comprises the main following steps:
- at a first step 30, a PLS-SKG (Physical Layer Security - Secret Key Generation) procedure occurs between the UE 20 and the xNB 21. This step allows to generate at the UE 20 and the xNB 21 a secret key K_{PLS}, which is generated by using physical layer properties of the radio channel during the communication between the UE 20 and the xNB 21. Each of the entities 20 and 21 proceed to independent channel measurement for PLS key derivation (generation).

So, at this step 30, a secret key K_{PLS} is obtained for the radio channel between the UE 20 and a base station 21 by using physical layer properties during a PLS-SKG procedure.

Such a procedure and the generation of a K_{PLS} key is for example described in the article "SECRET KEY GENERATION SCHEME FROM WIFI AND LTE REFERENCE SIGNALS" from Christiane L. Kameni Ngassa, Renaud Molière, François Delaveau, Taghrid Malzoum, Alain Sibille and Nir Shapira.
- at a next step 31, the xNB 21 securely transmits this secret key K_{PLS} to the AMF/SEAF 22 (located in the home network 11 or in the visited network 10, depending on the location of the UE 20). The AMF/SEAF 22 belongs to the home network 11 of the USIM or to the visited network 10 (visited PLMN).
- at step 32, the UE 20 sends its SUCI (Subscription Concealed Identifier) to the AMF/SEAF 22. In an enhanced variant, the message including the SUCI could be sent encrypted (crypto driven by K_{PLS}): This would counter passive interceptor (or passive part of IMSI catcher) that grab cell location and identifier in order to track UEs and also non authorized third party that intercept exchanges in core networks between the xNB 21 and the SEAF, and between the SEAF and the AUSF.
- at step 33, the AMF/SEAF 22 sends this SUCI and the K_{PLS} key to the AUSF/UDM 23.
- at step 34, the AUSF/UDM 23 sends an Authentication token AUTN (K, K_{PLS}) to the UE 20, K being the long-term key of the USIM (secure element) comprised in the UE 20. In an enhanced variant, the message including AUTN (K, K_{PLS}) could also be encrypted driven by K_{PLS} in order to avoid some replay attacks (after AUTN denial) and also to limit attacks of the AUTN, from passive interception by third parties or also into the core network. Integrating the K_{PLS} key as part of the authentication token generation allows the UE 20 to verify that the serving network is really the one connected to the AUSF/UDM 23. For performing this step, the AUSF/UDM 23 combines the long-term key K and the PLS-secret key K_{PLS} to generate an authentication token. This can involve mixing the long-term key K with the K_{PLS} key or using the K_{PLS} key as a one-time password (OTP) protected by the Message Authentication Code (MAC) generated from K.
- at step 35, the USIM on the UE 20 side verifies both the long-term key K and the secret key K_{PLS} using its internal computations to confirm the authenticity of the xNB 21. For this verification, the UE 20 decrypts the Authentication token based on the K_{PLS} key and the key K. The UE 20 sends back the usual authentication response (RES, CK, IK) to the AUSF/UDM 23 that decrypts the response with the key K and potentially the K_{PLS} key (depending on the derivation method used at step 34) for verification of its authenticity.

A double mutual authentication between the UE 20 and the AUSF/UDM 23 and between the UE 20 and the xNB 21 has thus been performed in a secure manner, based on the generation of the secret key K_{PLS} at step 30 in addition to usual long term key K. The security of the process can be enhanced by encryption of the exchanges (SUCI, AUTN, RES, CK, IK) in future variants of the invention.

The verification at the USIM of the receive token AUTN (K, K_{PLS}) is performed to confirm the authenticity of the long-term key and the secret key K_{PLS}, authenticity of the secret key K_{PLS} confirming the authenticity of the base station 21 for ensuring that the UE 20 connects to a legitimate base station.

In an enhanced variant, the messages including RES and CK, IK could be encrypted driven by K_{PLS} to avoid passive interception by third parties or into the core network. This also avoids some replay attacks (after AUTN denial).

In summary, the proposed invention leverages Physical Layer Security (PLS) and Secret Key Generation (SKG) between the UE 20 and the xNB 21 to generate a secret key K_{PLS}. This approach provides a lightweight cryptographic mechanism to ensure mutual authentication between the UE 20 and the legitimate xNB 21 in both home and visited networks.

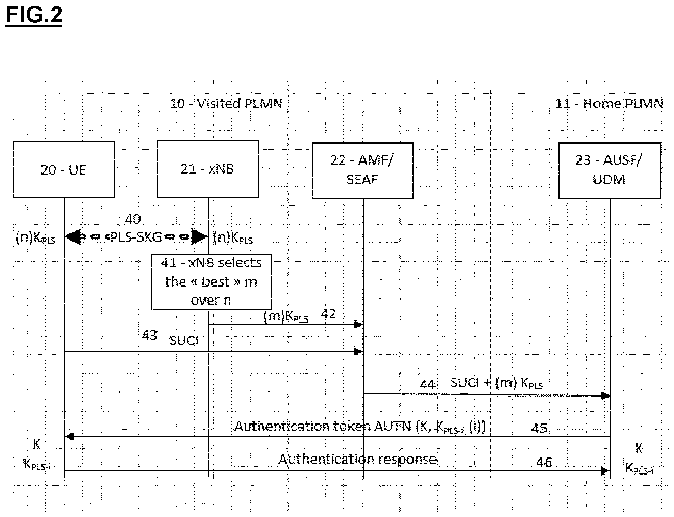

Figure 2 represents a first alternative for implementing the invention.

In this alternative, a slot selection for PLS is performed. The same entities than those of figure 1 are represented.

Here, at step 40, the UE 20 and the xNB 21 compute each other during a procedure called PLS key derivation (and obtained from independent channel measurement) multiple PLS keys (n keys named (n)K_{PLS}) for different (n) time slots. Alternatively, the n PLS keys K_{PLS} can be obtained over different frequency intervals for the given system channel bandwidth. Alternatively, the n PLS keys K_{PLS} can be obtained from different channel bandwidths supported by the UE 20 and the xNB 21.

At step 41, the xNB 21 selects the best m PLS keys over n and sends them (step 42) to the core network of the base station 21. These best m PLS keys are named (m)K_{PLS}.

The term "best" must be understood in the sense of the safety of the SKG process applied, in selecting m keys based on maximizing the entropy of the set (e.g. in order to increase the randomness of different potential keys and therefore reduce the probability of interception for the selected set of keys). For example, the m keys have then an entropy greater than a given threshold. Also, could be applied, criterions on the complexity of the radio environment in which the (n)K_{PLS} keys are generated (this complexity can be understood in the radio probing process which is the source of the production of randomness to extract the bits from the (n)K_{PLS} keys).

Some other methods for selecting strong keys can be used, these being known by the man skilled in the art.

After that, the SUCI is sent (step 43) from the UE 20 to the AMF/SEAF 22.

At step 44, the core network selects one key PLS key named K_{PLS-i} from the (m)K_{PLS} keys to compute the authentication token AUTN.

At step -a-, the UE 20 and the base station 21 negotiate the time slot i used for PLS at the beginning of the session for the establishment of a secret key K_{PLS-i}. A K_{PLS} key (i) is necessary for each frequency and/or radio channel used by the base station 21.

In regard of figure 2, for performing this step, the AUSF/UDM 23 combines the long-term key K and the selected PLS- secret key K_{PLS-i} to generate the authentication token. This can involve mixing the long-term key K with K_{PLS-i} or using K_{PLS-i} as a one-time password (OTP) protected by the Message Authentication Code (MAC) generated from K.

The AUSF/UDM 23 selects K_{PLS-i} in any manner, it can be a random choice of the identifier -i- of the key K_{PLS-i}.

The authentication token AUTN, which also includes the value i, is sent to the USIM of the UE 20 at step 45. AUTN thus comprises K, K_{PLS-i} and i.

At step 46, the USIM on the UE 20 side verifies both the long-term key K and the secret key K_{PLS-i} using its internal computations to confirm the authenticity of the xNB 21. For that, it compares the received K_{PLS-i} key with the K_{PLS-i} key generated at step 40 (based on the received value i) to verify if the received K_{PLS-i} is comprised in the (n)K_{PLS} keys (i.e. to verify that one of the (n)K_{PLS} keys is identical to K_{PLS-i}.

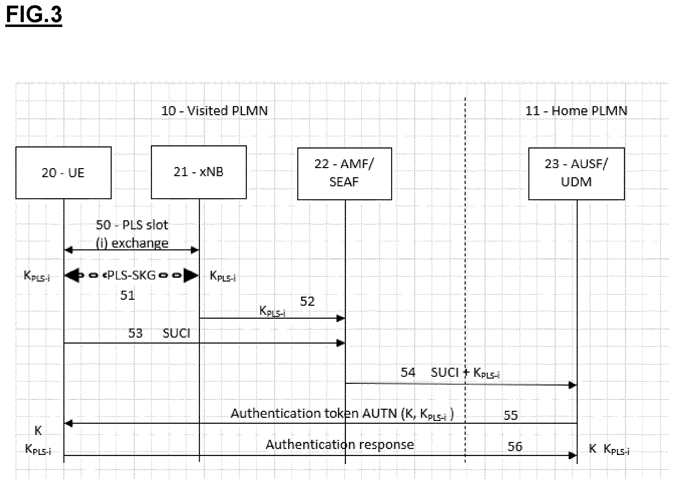

Figure 3 represents a second alternative for implementing the invention.

The same entities than those of figure 1 are represented.

In this figure, at step 50, the UE 20 and the xNB 21 negotiate the time slot i used for PLS at the beginning of the session. SKG is performed on a given frequency and/or given radio channel, and/or different frequency intervals for the given system channel bandwidth, and/or different channel bandwidths supported by the UE 20 and the xNB 21. This can be done based on USIM configuration or proposed by the xNB 21. It (i) can also be a random value/pseudorandom value, or generated from a specific function known by UE and the xNB as a function of time and/or frequency. It results in the establishment of a secret key K_{PLS-i}.

The next exchanges (steps 51-56) occur like represented in figure 1, these exchanges using K_{PLS-i} instead of K_{PLS}.

For adding security for this second alternative, the time slot number i can be periodically changed, based on System Frame Number (SFN), Subframe Number, Slot Number, or even Symbol Number. Dynamic Bandwidth Adjustments (DBA) or Bandwidth Part (BWP) can also be implemented for additional protection.

The preceding description has been done considering that the USIM performs different checks and computations, but these steps can also be performed at the level of the UE 20 (when no USIM is present). In this case, K is stored in the device (in a HSM, Hardware Security Module, for example) since there is no more secure element for securing K. In the scope of the description and the appended claims, there is an equivalence between a device comprising a USIM and a device without USIM.

The invention also concerns a communication system ensuring that a UE 20 comprising a USIM connects to a legitimate base station, the system comprising:
- a visited PLMN 10 in which a UE 20 is under coverage of a base station 21 of the visited PLMN 10;
- a home PLMN 11;

the system being configured for generating at the UE 20 and the base station 21 at least a secret key K_{PLS} using physical layer properties of the radio channel during a PLS-SKG procedure between the UE 20 and the base station 21;
and in which:
   - the base station 21 is configured for sending to an AMF/SEAF 22 at least one of the secret keys K_{PLS}, the AMF/SEAF 22 belonging to the home network 11 of the USIM or to a visited network 10;
   - the UE 20 is configured for sending its SUCI to the AMF/SEAF 22;
   - the AMF/SEAF 22 is configured for sending the SUCI and the secret key K_{PLS} to an AUSF/UDM 23;
   - the AUSF/UDM 23 is configured for sending an Authentication token AUTN K, K_{PLS} to the UE 20, the Authentication token AUTN K, K_{PLS} being generated based on the long-term key of the USIM and the secret key K_{PLS};
   - the USIM is configured for verifying the received Authentication token AUTN K, K_{PLS} to confirm the authenticity of the long-term key and the secret key K_{PLS}, authenticity of the secret key K_{PLS} confirming the authenticity of the base station 21 for ensuring that the UE 20 connects to a legitimate base station.

Additionally, the invention concerns a base station 21 of a communication system ensuring that a UE 20 comprising a USIM connects to a legitimate base station, the base station 21 being configured for:
- generating at least a secret key K_{PLS} using physical layer properties of the radio channel during a PLS-SKG procedure between the UE 20 and the base station 21;
- sending to an AMF/SEAF 22 at least one of the secret keys K_{PLS}, the AMF/SEAF 22 belonging to the home network 11 of the USIM or to a visited network 10.

The invention also concerns a USIM of a UE 20 configured for ensuring that the UE 20 connects to a legitimate base station, the USIM being configured for:
- generating at least a secret key K_{PLS} using physical layer properties of the radio channel during a PLS-SKG procedure between the UE 20 and the base station 21;
- receiving from an AUSF/UDM 23 an Authentication token AUTN K, K_{PLS} being generated based on the long-term key of the USIM and the secret key K_{PLS};
- verifying the received Authentication token AUTN K, K_{PLS} using its internal computations to confirm the authenticity of the long-term key and the secret key K_{PLS}, authenticity of the secret key K_{PLS} confirming the authenticity of the base station 21 for ensuring that the UE 20 connects to a legitimate base station.

Similarly, the invention concerns, when there is no USIM, a UE 20 configured for ensuring that the UE 20 connects to a legitimate base station, the UE 20 being configured for:
- generating at least a secret key K_{PLS} using physical layer properties of the radio channel during a PLS-SKG procedure between the UE 20 and the base station 21;
- receiving from an AUSF/UDM 23 an Authentication token AUTN K, K_{PLS} being generated based on the long-term key of the UE 20 and the secret key K_{PLS};
- verifying the received Authentication token AUTN K, K_{PLS} using its internal computations to confirm the authenticity of the long-term key and the secret key K_{PLS}, authenticity of the secret key K_{PLS} confirming the authenticity of the base station 21 for ensuring that the UE 20 connects to a legitimate base station.

The advantages of the invention are that authentication always involves the home network, reducing the risk of rogue xNB attacks while roaming.

Compared to PKI-based cryptography, PLS-based solutions are lightweight and energy-efficient, making them suitable for low-power devices.

All mentioned generated keys K_{PLS} or K_{PLS-i} are obtained through independent channel measurement for PLS key derivation (or generation).

The proposed method provides a robust mechanism to protect against rogue base stations by ensuring mutual authentication between the UE 20 and the xNB 21 using PLS-SKG. By leveraging physical layer characteristics, it enhances security while maintaining low computational overhead, making it both scalable and cost-effective.

## Claims

1. Method for ensuring that a UE (20) comprising a USIM connects to a legitimate base station, said method comprising:
a. generating (30) at said UE (20) and a base station (21) at least a secret key K_{PLS} using physical layer properties of the radio channel during a PLS-SKG procedure between said UE (20) and said base station (21);
b. sending (31) from said base station (21) to an AMF/SEAF (22) at least one of said secret keys K_{PLS}, said AMF/SEAF (22) belonging to the home network (11) of said USIM or to a visited network (10);
c. sending (32) from said UE (20) its SUCI to said AMF/SEAF (22);
d. sending from said AMF/SEAF (22) said SUCI and said secret key K_{PLS} to an AUSF/UDM (23);
e. sending (34), from said AUSF/UDM (23) an Authentication token AUTN (K, K_{PLS}) to said UE (20), said Authentication token AUTN (K, K_{PLS}) being generated based on the long-term key of said USIM and said secret key K_{PLS};
f. verifying (35) at said USIM the received Authentication token AUTN (K, K_{PLS}) using its internal computations to confirm the authenticity of said long-term key and said secret key K_{PLS}, authenticity of said secret key K_{PLS} confirming the authenticity of said base station (21) for ensuring that said UE (20) connects to a legitimate base station.

2. The method according to claim 1, wherein:
- at step -a-, n PLS keys ((n) K_{PLS}) are generated for different time slots between said UE (20) and said base station (21), n being >= 1;
- said base station (21) selects m keys over n and sends them to the core network of said base station (21), said m keys having maximum of entropy;
- after having sent (43) said SUCI from said UE (20) to said AMF/SEAF (22), said core network selects from the m keys one key (i), named K_{PLS-i} key, to compute by said AUSF/UDM (23) said authentication token (AUTN) by combining said long-term key K and said K_{PLS-i} key;
- sending (45) from said AUSF/UDM (23) to said USIM said authentication token (AUTN) comprising said value i;
- verifying (46) at said USIM the received AUTN to confirm the authenticity of said long-term key K and said K_{PLS-i} key, authenticity of said K_{PLS-i} key confirming the authenticity of said base station (21) for ensuring that said UE (20) connects to a legitimate base station.

3. The method according to claim 1, wherein said authentication token (AUTN) is computed:
- by mixing the long-term key K with K_{PLS-i}, or
- by using K_{PLS-i} as a one-time password (OTP) protected by the Message Authentication Code (MAC) generated from K.

4. The method according to claim 1, wherein;
- at step -a-, said UE (20) and said base station (21) negotiate the time slot i used for PLS at the beginning of the session for the establishment of a secret key K_{PLS-i};
- steps -b- to -f- are performed by using said secret key K_{PLS-i} instead of K_{PLS}.

5. The method according to claim 4, wherein said time slot i is periodically changed, based on System Frame Number (SFN), Subframe Number, Slot Number, Symbol Number, Dynamic Bandwidth Adjustments (DBA) or Bandwidth Part (BWP).

6. The method according to claim 4, wherein said UE (20) and said base station (21) exchange SUCI, AUTN and RES in an encrypted manner which is driven by secret keys K_{PLS}, K_{PLS-i}.

7. A communication system ensuring that a UE (20) comprising a USIM connects to a legitimate base station, said system comprising:
- a visited PLMN (10) in which a UE (20) is under coverage of a base station (21) of said visited PLMN (10);
- a home PLMN (11);
said system being configured for generating (30) at said UE (20) and said base station (21) at least a secret key K_{PLS} using physical layer properties of the radio channel during a PLS-SKG procedure between said UE (20) and said base station (21);
and in which:
- said base station (21) is configured for sending (31) to an AMF/SEAF (22) at least one of said secret keys K_{PLS}, said AMF/SEAF (22) belonging to the home network (11) of said USIM or to a visited network (10);
- said UE (20) is configured for sending its SUCI to said AMF/SEAF (22);
- said AMF/SEAF (22) is configured for sending said SUCI and said secret key K_{PLS} to an AUSF/UDM (23);
- said AUSF/UDM (23) is configured for sending an Authentication token AUTN (K, K_{PLS}) to said UE (20), said Authentication token AUTN (K, K_{PLS}) being generated based on the long-term key of said USIM and said secret key K_{PLS};
- said USIM is configured for verifying the received Authentication token AUTN (K, K_{PLS}) to confirm the authenticity of said long-term key and said secret key K_{PLS}, authenticity of said secret key K_{PLS} confirming the authenticity of said base station (21) for ensuring that said UE (20) connects to a legitimate base station.

8. A base station (21) of a communication system ensuring that a UE (20) comprising a USIM connects to a legitimate base station, said base station (21) being configured for:
- generating (30) at least a secret key K_{PLS} using physical layer properties of the radio channel during a PLS-SKG procedure between said UE (20) and said base station (21);
- sending (31) to an AMF/SEAF (22) at least one of said secret keys K_{PLS}, said AMF/SEAF (22) belonging to the home network (11) of said USIM or to a visited network (10).

9. A USIM of a UE (20) configured for ensuring that said UE (20) connects to a legitimate base station, said USIM being configured for:
- generating (30) at least a secret key K_{PLS} using physical layer properties of the radio channel during a PLS-SKG procedure between said UE (20) and said base station (21);
- receiving from an AUSF/UDM (23) an Authentication token AUTN (K, K_{PLS}) generated based on the long-term key of said USIM and said secret key K_{PLS};
- verifying (35) the received Authentication token AUTN (K, K_{PLS}) using its internal computations to confirm the authenticity of said long-term key and said secret key K_{PLS}, authenticity of said secret key K_{PLS} confirming the authenticity of said base station (21) for ensuring that said UE (20) connects to a legitimate base station.

10. A UE (20) configured for ensuring that said UE (20) connects to a legitimate base station, said UE (20) being configured for:
- generating (30) at least a secret key K_{PLS} using physical layer properties of the radio channel during a PLS-SKG procedure between said UE (20) and said base station (21);
- receiving from an AUSF/UDM (23) an Authentication token AUTN (K, K_{PLS}) being generated based on the long-term key of said UE (20) and said secret key K_{PLS};
- verifying (35) the received Authentication token AUTN (K, K_{PLS}) using its internal computations to confirm the authenticity of said long-term key and said secret key K_{PLS}, authenticity of said secret key K_{PLS} confirming the authenticity of said base station (21) for ensuring that said UE (20) connects to a legitimate base station.
